# EUROPÄISCHE PATENTSCHRIFT

(11) **EP 1 687 222 B1**
(45) Veröffentlichungstag und Bekanntmachung des Hinweises auf die Patenterteilung: **04.07.2007**
(21) Anmeldenummer: 04797637.8
(22) Anmeldetag: 05.11.2004
(51) Int. Cl.: B65G 47/84, B65G 29/00

(54) **VERFAHREN UND VORRICHTUNG ZUM HANDHABEN VON GEGENSTÄNDEN**
METHOD AND DEVICE FOR HANDLING OBJECTS
PROCEDE ET DISPOSITIF POUR MANIPULER DES OBJETS

(30) Priorität: 26.11.2003 DE 10355183
(43) Veröffentlichungstag der Anmeldung: 09.08.2006
(73) Patentinhaber: Krones Aktiengesellschaft, 93073 Neutraubling (DE)
(72) Erfinder: FIEGLER, Rudolf, 93053 Regensburg (DE)
(86) Internationale Anmeldenummer: PCT/EP2004/012519
(87) Internationale Veröffentlichungsnummer: WO 2005/058734

(56) Entgegenhaltungen:
- FR-A1- 2 576 003
- FR-A1- 2 827 044

## Beschreibung

Die Erfindung bezieht sich auf ein Verfahren gemäß dem oberbegriff des Anspruchs 1 und eine Vorrichtung gemäß dem oberbegriff des Anspruchs 6 zum Handhaben von Gegenständen wie Gefäße, insbesondere von Flaschen.

Bei der Handhabung von Gefäßen, insbesondere von Flaschen, beispielsweise in Verfahrensstraßen, in denen die Flaschen befüllt, verschlossen, auf Füllstand bzw. Dichtheit kontrolliert oder etikettiert werden, gibt es immer wieder Situationen, wo es wünschenswert ist, eine gewisse Wartezeit einzuhalten, sei es um beispielsweise den Rückgang einer übermäßigen Schaumbildung abzuwarten, sei es um beispielsweise bei einer Dichtigkeitsprüfung zwischen der Anfangs- und der Endmessung eine ausreichend lange zeit einen Druck auf flexible Gefäße ausüben zu können, damit die Prüfvorrichtungen sicher eine eventuelle Undichtheit identifizieren können, usw. Bei den überwiegend automatisierten Verfahrenslinien sollte jedoch eine durchgängige Förderung aufrechterhalten werden, um den Zeitdurchlauf zu optimieren. Andererseits sollten die Förder- und Behandlungsvorrichtungen für die Gefäße möglichst kompakt aufgebaut sein, um Stellplatz bzw. Bauraum zu sparen.

Aus FR 2 576 003 A1 ist bereits eine Vorrichtung zur Mehrfachbehandlung von Gegenständen auf einem Umlaufförderer bekannt, wobei die Gegenstände nach jedem Umlauf entfernt und mit Hilfe einer Transfereinrichtung erneut dem Umlaufförderer zugeführt werden. Diese Vorrichtung baut raumgreifend und ist in Bezug auf die damit erreichbare Leistung und Betriebssicherheit beschränkt.

Der Erfindung liegt die Aufgabe zugrunde, ein Verfahren und eine Vorrichtung zum Handhaben von Gefäßen, insbesondere von Flaschen, bereitzustellen, das/die auf konstruktiv einfache Weise und in kompakter Bauweise notwendige Wartezeiten bei der Handhabung der Gefäße gestattet.

Die Aufgabe wird durch das Verfahren gemäß Anspruch 1 und die Vorrichtung gemäß Anspruch 6 gelöst.

Durch die erfindungsgemäße Ausgestaltung wird auf konstruktiv einfache Weise und in kompakter, platzsparender Bauweise eine Möglichkeit geschaffen, Gefäße jeweils zwischen zwei Bearbeitungsvorgängen eine gewisse Wartezeit durchlaufen zu lassen.

Von besonderem Vorteil sind die Ausgestaltungen nach den Ansprüchen 2 bzw. 7 bis 9, durch die auf konstruktiv einfache, mechanische Weise sichergestellt wird, dass die Gefäße die gewünschte Strecke mehrfach durchlaufen, wobei sowohl die Einlauf- und Auslaufstation als auch der Umlaufförderer kontinuierlich, d.h. entweder gleichmäßig getaktet oder geschwindigkeitskonstant durchlaufend, betrieben werden können, ohne dass aufwendige Steuerungen, basierend auf einer Identifikation jedes einzelnen Gefäßes, verwendet werden müssen.

Die Erfindung ist besonders dort vorteilhaft anwendbar, wo es darum geht, eine Dichtigkeitsprüfung von flexiblen Gefäßen, beispielsweise Kunststoffflaschen, durchzuführen. Für eine solche Dichtigkeitsprüfung, wie sie beispielsweise aus der WO01/29528 bekannt ist, ist es zweckmäßig, eine Anfangsmessung durchzuführen, dann das Gefäß unter Druck zu setzen und eine Endmessung durchzuführen, wobei beide Messwerte miteinander verglichen und beim Abweichen beider Messwerte um einen vorgegebenen Toleranzwert, das Gefäß als undicht verworfen wird. Bei der bekannten Messung sind somit zwei Prüfeinrichtungen und eine zwischen den Prüfeinrichtungen liegende Förderstrecke notwendig, wobei die Gefäße in der Förderstrecke unter permanenten Druck gehalten werden. Zwar ist es auch möglich, beispielsweise mit der Vorrichtung nach der DE 197 03 528, undichte, flexible Gefäße durch eine einzige Messung festzustellen. Diese Druckschrift beschreibt Klemmgreifer, mit denen auf die Gefäße ein vorbestimmter Druck ausgeübt wird, unter dem sich undichte Gefäße elliptisch auswölben. Diese elliptische Auswölbung wird bevorzugt über eine Lichtschranke festgestellt, die jedoch so einjustiert werden muss, dass ihr Lichtstrahl exakt gerade außerhalb einer akzeptierten Auswölbung der Gefäße am Umfang der Gefäße vorbeistreicht. Dazu ist es jedoch notwendig, die Lichtschranke genau auf die vorbestimmte Form und die vorbestimmten Abmessungen einzustellen, was sich nur lohnt, wenn mit der Vorrichtung nur Gefäße einer einzigen Form und einer einzigen Dimensionierung gefördert werden.

Mit der erfindungsgemäßen Ausbildung ist es dagegen möglich, wenigstens eine Zweifachmessung mit einer einzigen Prüfvorrichtung vorzunehmen, so dass mit der gleichen Prüfvorrichtung beim ersten Messen ein Referenzwert erhalten wird, der beispielsweise einem akzeptierten Wert einer bestimmten Gefäßform oder -abmessung entspricht und als Dichtheit interpretiert wird, wonach die Gefäße einem Außendruck unterworfen werden und anschließend die Veränderungen durch den Außendruck beim zweiten Messen durch die gleiche Prüfvorrichtung festgestellt und entschieden wird, ob die Veränderungen, beispielsweise die Verformungen, innerhalb eines akzeptierten Rahmens liegen oder die Flasche als undicht verworfen werden muss. Damit sind auch nur geringfügige Leckagen erkennbar, die erst nach längerer Krafteinwirkung zu einer detektierbaren Gefäßverformung führen.

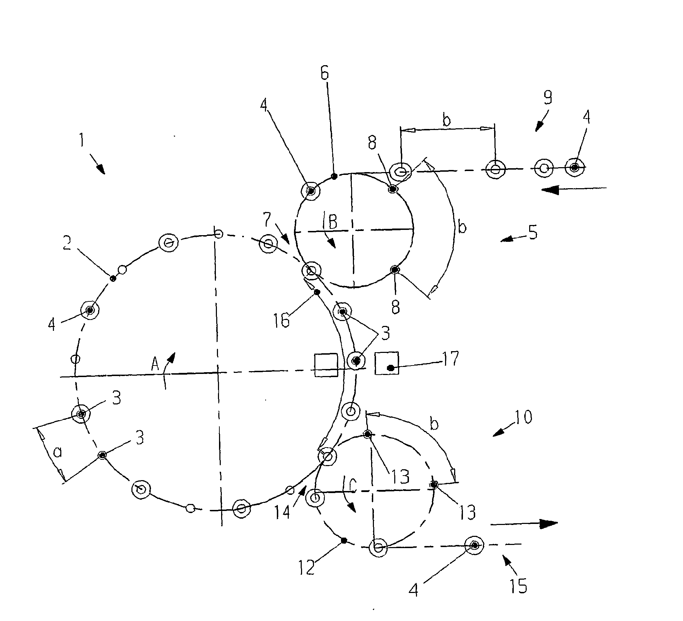

Ein Ausführungsbeispiel der Erfindung wird nachfolgend anhand der einzigen Zeichnung näher erläutert, die eine erfindungsgemäße Vorrichtung zum Durchführen des erfindungsgemäßen Verfahrens in schematischer Darstellung und in Draufsicht zeigt.

Die Figur zeigt eine erfindungsgemäße Vorrichtung 1 zum Handhaben von Gefäßen, die in einem bevorzugten Ausführungsbeispiel als Teil einer Befüllvorrichtung für Gefäße, insbesondere als Teil einer Befüllvorrichtung für flexible Kunststoffflaschen ausgebildet ist. Die Vorrichtung 1 enthält einen Umlaufförderer 2 in Form eines der üblichen Karussells, der in Richtung des Pfeiles A rotierend angetrieben wird, wobei A die Förderrichtung des Umlaufförderers 2 bestimmt. Auf dem Umlaufförderer 2 sind eine vielzahl von Förderplätzen 3 vorgesehen.

Im einfachsten Fall wird ein Förderplatz nur durch eine Unterstützungsfläche oder einen ggf. gesteuerten drehbaren Teller zur frei stehenden Aufnahme eines Gefäßes gebildet. Bei höheren Umlaufgeschwindigkeiten des Karussells ist eine Halterung der Gefäße sinnvoll. Die Förderplätze 3 können dann mit herkömmlichen und im Stand der Technik bekannten Greif- oder Halteeinrichtungen für Gefäße 4 versehen sein. Eine Halteeinrichtung kann beispielsweise als eine selektiv gesteuert heb- und senkbare Zentrierglocke (nicht dargestellt) zum axialen Einspannen eines Gefäßes zwischen seinem Kopf und Boden ausgebildet sein, wobei die Zentrierglocke drehbar ist, wenn ein Gefäß um seine Hochachse verdrehbar gehaltert sein soll.

Alternativ können mit selektiv steuerbaren Vakuummitteln arbeitende Halterungen verwendet werden, die am Boden und/oder der Mantelfläche von Gefäßen angreifen.

Besonders betriebssicher sind mechanisch arbeitende, am Rumpf oder Hals von Gefäßen angreifende Greifklammern. Geeignete Greifklammern sind in DE 197 03 528 A1, EP 0 726 216 B1, EP 0 743 267 B1, EP 0 894 544 B1 oder EP 1 009 710 B1 ausführlich beschrieben. Diese Greifklammern sind insbesondere auch für eine bodenfreie Halterung von Gefäßen geeignet.

Die genannten Förderplätze 3 sind mit gleichmäßigen Teilungsabständen a um den Umfang des Umlaufförderers 2 verteilt angeordnet. Am Umlaufförderer 2 sind bevorzugt eine ungerade Anzahl an Förderplätzen 3 vorgesehen.

Die Förderplätze 3 können, wie in der Figur dargestellt, zur Aufnahme jeweils eines Gefäßes 4 ausgebildet sein. In Vorrichtungen, bei denen mehrere Gefäße gleichzeitig gefördert bzw. gehandhabt werden, können die Förderplätze 3 jedoch auch zur Aufnahme mehrerer Gefäße 4 ausgebildet sein.

Die Vorrichtung 1 enthält weiterhin eine Einlaufstation 5, die einen Einlaufstern 6 enthält, der in Richtung des Pfeiles B, der seine Förderrichtung definiert, rotierend angetrieben ist. Die Umfangsgeschwindigkeit des Einlaufsternes 6 entspricht der Umfangsgeschwindigkeit des Umlaufförderers 2 an der gemeinsamen Berührungsstelle 7, an der die Gefäße 4 vom Einlaufstern 6 an den Umlaufförderer 2 übertragen werden, ist jedoch der Drehrichtung A entgegengesetzt. Auf dem Einlaufstern 6 sind wiederum eine Vielzahl von Förderplätzen 8 für Gefäße 4 vorgesehen, die mit einem gleichmäßigen Teilungsabstand b um den Umfang des Einlaufsterns 6 verteilt angeordnet sind. Bevorzugt enthalten die Förderplätze 8 die gleichen Greif- bzw. Halteeinrichtungen wie die Förderplätze 3 oder sind mit diesen kompatibel, so dass die Gefäße 4 an der Übergabestelle 7 problemlos von den Förderplätzen 8 auf die Förderplätze 3 übergeben werden können. Der Teilungsabstand b zwischen den Förderplätzen 8 beträgt jedoch den doppelten Teilungsabstand a zwischen den Förderplätzen 3. Dieser doppelte Teilungsabstand b kann entweder durch eine entsprechende vergrößerte Anordnung der Förderplätze 8 auf dem Einlaufstern 6 oder durch ein Unwirksammachen der dazwischenliegenden Förderplätze bzw. deren Greif- oder Halteeinrichtungen bewirkt werden. Im dargestellten Ausführungsbeispiel enthält der Einlaufstern 6 vier Förderplätze 8, ist jedoch nicht auf diese Anzahl beschränkt.

Die Einlaufstation 5 enthält weiterhin eine Einteilvorrichtung, z. B. eine bekannte Einteilschnecke 9, die hier jedoch nicht näher dargestellt ist. Durch die Einteilschnecke 9 werden die in Reihe hintereinanderliegend ankommenden Gefäße 4 auf den Teilungsabstand b gebracht, so dass sie an den Einlaufstern 6 übergeben werden können. Falls erforderlich, können jedoch andere Übergabeeinrichtungen in der Einlaufstation 5 verwendet bzw. als Einlaufstation 5 der Ausgang einer vorangegangenen Handhabungsvorrichtung für die Gefäße verwendet werden.

In Förderrichtung A von der Einlaufstation 5 beabstandet ist eine Auslaufstation 10 vorgesehen, die im dargestellten Ausführungsbeispiel wiederum als Auslaufstern 12 ausgebildet ist, der bevorzugt wie der Einlaufstern 6 ausgebildet ist, d.h. Förderplätze 13 im Teilungsabstand b aufweist und in Richtung des Pfeiles C entgegengesetzt zur Drehrichtung A aber mit einer gleichen Umfangsgeschwindigkeit wie der Umlaufförderer 2 angetrieben wird, so dass an einer Auslaufstelle 14 die Gefäße 4 vom Umlaufförderer 2 auf den Auslaufstern 12 übergeben werden können. Die Förderplätze 13 sind jedoch gegenüber den Förderplätzen 8 der Einlaufstation 5 um einen halben Teilungsabstand b bzw. einen ganzen Teilungsabstand a versetzt. Die Förderplätze 13 sind bevorzugt mit den gleichen Halte- oder Greifeinrichtungen wie der Umlaufförderer 2 oder Einlaufstern 6 versehen oder mit ihnen kompatibel. Die Auslaufstation 10 enthält weiterhin einen Entladeförderer 15, der die Gefäße 4 vom Auslaufstern 12 weg transportiert.

Die Einlaufstelle 7 der Einlaufstation 5 ist von der Auslaufstelle 14 der Auslaufstation 10 in einem Abstand angeordnet, der im dargestellten Ausführungsbeispiel der Summe der Teilungsabschnitte einer ungeraden Anzahl Förderplätze 3 entspricht. Der Bereich zwischen der Einlaufstelle 7 und der Auslaufstelle 14 ist als Strecke 16 für einen Mehrfachdurchlauf der Gefäße 4 ausgelegt.

Das dargestellte Ausführungsbeispiel der Vorrichtung 1 bewirkt diesen Mehrfachdurchlauf auf rein mechanischem Wege, allein durch eine zweckmäßige Bemessung der Förderabstände.

Das dargestellte Ausführungsbeispiel der Vorrichtung 1 wird wie folgt betrieben:

Die zu handhabenden Gefäße 4 werden zunächst in die Einteilschnecke 9 der Einlaufstation 5 gebracht, dort auf den großen Teilungsabschnitt b auseinander gezogen und dann auf die Förderplätze 8 des Einlaufsterns 6 gebracht, wobei alle Förderplätze 8, die sich im Teilungsabstand b befinden, mit den Gefäßen 4 beschickt werden. Die Gefäße 4 werden in Richtung des Pfeiles B an die Einlaufstelle 7 transportiert und dort auf einen freien Förderplatz 3 des Karussells 2 übergeben. Durch den doppelten Teilungsabstand b des Einlaufsterns 6 wird nur jeder zweite Förderplatz 3 des Karussells 2 besetzt.

Das Karussell 2 dreht sich in Förderrichtung A in Richtung auf die Auslauf stelle 14. Gelangt der Förderplatz 3, der gerade vom Einlaufstern 6 mit dem Gefäß 4 beschickt wurde, an die Auslaufstelle 14, so wird durch eine zweckmäßige Taktung oder Umlaufsteuerung des Auslaufsterns 12 dafür gesorgt, dass sich an der Auslaufstelle 14 kein wirksamer Förderplatz 13 des Auslaufsterns 12 befindet bzw. kein zugriff auf das vorbeilaufende Gefäß erfolgt. Das gerade in das Karussell 2 eingeführte Gefäß läuft somit zunächst an der Auslaufstation 10 vorbei und gelangt wieder in den Bereich der Einlaufstation 5. Durch die ungerade Anzahl der Förderplätze 3 auf dem Karussell 2 gelangt jedoch dieses Gefäß 4 zu einer Zeit an die Einlaufstelle 7, zu der sich dort kein wirksamer Förderplatz 8 des Einlaufsternes 6 befindet bzw. in diesem Moment kein neues Gefäß zugeführt wird, so dass das Gefäß 4 die Einlaufstelle 7 glatt passieren kann. Dann gelangt dieses Gefäß 4 wiederum in die Strecke 16 und durchläuft diese nochmals. Wiederum durch die ungerade Anzahl der Förderplätze 3 bzw. die selektive Ansteuerung der Halteorgane auf dem Karussell 2 bedingt, erreicht dieses Gefäß dann die Auslaufstelle 14, wenn sich dort ein wirksamer Förderplatz 13 des Auslaufsternes 12 befindet, der dieses Gefäß dann vom Karussell 2 abnehmen und dem Förderer 15 übergeben kann.

Währenddessen fährt der Einlaufstern 6 fort, jeden zweiten Förderplatz 3 des Karussells 2 zu beschicken, so dass in der Strecke 16 alle Förderplätze 3 besetzt sind, während außerhalb der Strecke 16 nur jeder zweite Förderplatz 3 besetzt ist.

Das beschriebene Ausführungsbeispiel der Vorrichtung 1 kann je nach Verwendungszweck abgewandelt werden. Im dargestellten Ausführungsbeispiel wird die Vorrichtung 1 für eine Leckageprüfung gefüllter und verschlossener Gefäße verwendet. Dabei ist der Einlaufstern 6 einer Befüll- und Verschließeinrichtung für die Gefäße 4 zugeordnet. Den Förderplätzen 3 des Karussells 2 sind Einrichtungen zum Ausüben eines vorbestimmten Druckes auf die Gefäße 4, bevorzugt flexible Kunststoffflaschen, zugeordnet bzw. die Förderplätze 3 sind direkt als solche ausgebildet. Die Einlaufstelle 7 und die Auslaufstelle 14 sind in diesem Fall möglichst nahe beieinander angeordnet, so dass die Strecke 16 relativ kurz ist. In der Strecke 16 ist ein Inspektionssystem bzw. eine Prüfeinrichtung 17 angeordnet, mit der leckagerelevante Parameter der Gefäße feststellbar sind, also bevorzugt eine durch einen andauernden Druck auf die Gefäße 4 bewirkte Verformung der Gefäße 4. Durch die eng benachbarte Anordnung der Einlaufstelle 7 und der Auslaufstelle 14, die im dargestellten Ausführungsbeispiel nur der Länge von fünf benachbarten Förderplätzen 3 entspricht, werden die Gefäße 4 durch die Prüfeinrichtung 17 ein erstes Mal kurz nach dem Einlaufen über die Einlaufstelle 7 getestet. Ein zweites Mal werden die Gefäße 4 getestet beim zweiten Durchlauf der Strecke 16, d.h. unmittelbar vor dem zweiten Erreichen der Auslaufstelle 14, unmittelbar vor dem Ausschleusen durch den Auslaufstern 12. Durch die Verwendung ein und derselben Prüfeinrichtung 17 sowohl für die Referenz- bzw. Eingangsmessung und der eigentlichen Leckagemessung ist eine hohe Nachvollziehbarkeit der Messung bzw. Inspektion mit geringem messtechnischen Aufwand möglich.

Der Abstand zwischen der Einlaufstelle 7 und der Auslaufstelle 14 beträgt für diesen Anwendungszweck nur wenige Förderplätze 3 und bevorzugt weniger als die Hälfte, insbesondere weniger als ein Viertel des Umfangs des Karussells 2. Im dargestellten Ausführungsbeispiel hat der Umlaufförderer 2 insgesamt 17 Förderplätze 3 und die Strecke 16 entspricht 5 Förderplätzen, so dass jedes Gefäß 4 bei einem vollständigen Durchlauf 22 Takte im System bzw. auf dem Karussell 2 bleibt und dabei die 22-fache Wegstrecke von a zurücklegt.

Für andere Anwendungszwecke kann der Abstand zwischen der Einlaufstelle 7 und der Auslaufstelle 14, d.h. die Länge der mehrfach zu durchlaufenden Strecke 16 vergrößert werden, beispielsweise wenn eine ausreichende zeit zur verfügung gestellt werden muss, um beispielsweise eine Schaumbildung abklingen zu lassen, die Gefäße einer Inspektion zu unterziehen oder eine anderweitige Gefäßbehandlung auszuführen. Die erfindungsgemäße Ausgestaltung bietet somit die Möglichkeit, ein Gefäß über eine längeren Weg (bei ansonsten gleicher zeit) zu inspizieren als dies eigentlich mit der Maschinengröße möglich ist (z.B. Rotieren und Inspizieren im gleichen Karussell).

Weitere Abwandlungen der erfindungsgemäßen Vorrichtung sind möglich; so kann beispielsweise die mehrfach zu durchlaufende Strecke 16 annähernd den gesamten Umlaufweg des Umlaufförderers 2 einnehmen, wenn die Auslaufstation 10 an der in der Figur linken Seite der Einlaufstation 5 vorgesehen wird. Die Anzahl der Förderplätze kann verändert und an den Bedarf angepasst werden. Die mehrfach auf der gleichen Umlaufbahn zu durchfahrende Strecke 16 kann beispielsweise auch für einen Dreifachdurchlauf ausgelegt werden, wobei die mechanisch gesteuerte Beschickung beispielsweise dadurch erreicht wird, dass nur jeder dritte Förderplatz auf dem Karussell beschickt und, um zwei Förderplätze versetzt, nur jeder dritte Förderplatz an der Auslaufstation wieder entleert wird. Die Einlauf- und die Auslaufstation können zum Beschicken und Entleeren im gleichen Takt ausgebildet sein, wenn sich Einlaufstelle 7 und Auslaufstelle 14 in einem einer gerade Anzahl von Förderplätzen 3 entsprechenden Abstand zueinander befinden. Schließlich kann die versetzte Beschickung und Entleerung auch durch steuerungstechnische Maßnahmen sichergestellt werden, wenn auch unter erhöhtem Aufwand.

So können beispielsweise Ein- und Auslaufsternräder mit steuerbaren Greiforganen zum Einsatz kommen, deren Teilungsabstand mit dem Teilungsabstand des Karussells übereinstimmt, wobei jedoch jedes einzelne Greiforgan selektiv mittels einer Steuerung aus einer Öffnungsstellung in eine zugriffsstellung und umgekehrt durch zeitgenaues Ansteuern von Betätigungsorganen, wie pneumatische Stellzylinder oder dgl. überführbar ist. Diesbezüglich wird auf den vorhergehend genannten druckschriftlich bekannten Stand der Technik verwiesen. In Verbindung mit Sensoren, Schieberegistern und Drehstellungsgebern am Karussell kann die Steuerung den Durchlauf jedes einzelnen Gefäßes durch die Maschine verfolgen (Positionsverfolgung) und in Abhängigkeit der gewünschten Anzahl von Umläufen auf dem Karussell den zugriff oder die Freigabe der Greif- oder Halteorgane an den Sternrädern und/oder dem Karussell einzeln zeit- und stellungsgenau auslösen.

Zum Antreiben der Einteilschnecke 9 kann ein über die Steuerung bedarfsweise aktivierbarer Antrieb, z. B. Schritt- oder Servomotor vorgesehen werden, der nur immer dann anläuft, wenn dem Einlaufsternrad 6 ein Gefäß zugeführt werden soll.

Ein Mehrfachumlauf eines Gefäßes auf dem Karussell kann auch in Verbindung mit völlig konventionellen, lediglich Aufnahmetaschen für die Gefäße aufweisenden Ein- und Auslaufsternrädern erfolgen. Die Teilungsabstände können dabei mit denen des Karussells übereinstimmen. Es sind dann lediglich an der radial äußeren Seite der Sternräder sich bis zum Karussell erstreckende Führungen vorzusehen, die ein radiales Weggleiten der Gefäße verhindern. Im Auslaufbereich 14 wäre dann auf der radial inneren Seite der Förderplätze 3 des Karussells eine ortsfest positionierte aber individuell ansteuerbare Weiche bzw. ein kurzes Kurvenstück vorzusehen, das kurzzeitig in die Umlaufbahn eines Gefäßes 4 in Richtung zum Auslaufsternrad 12 schwenkbar ist, wenn das Gefäß die erforderliche Anzahl von Umläufen hinter sich hat und vom Auslaufsternrad abgeführt werden soll.

## Patentansprüche

1. Verfahren zum Handhaben von Gegenständen, wie Gefäße (4), insbesondere Flaschen, wobei die Gefäße (4) an einer Einlaufstation (5) an einen Umlaufförderer (2) übergeben, vom Umlaufförderer (2) zunächst an einer Auslaufstation (10) und wieder an der Einlaufstation (5) vorbei zur Auslaufstation (10) gefördert und frühestens beim zweiten Erreichen der Auslaufstation (10) aus dem Umlaufförderer (2) entfernt werden, wobei eine Strecke (16) in Förderrichtung (A) zwischen der Einlaufstation (5) und der Auslaufstation (10) mehrfach durchlaufen wird.

2. Verfahren nach Anspruch 1, **dadurch gekennzeichnet, dass** die Strecke (16) zweifach durchlaufen wird und dass bei jedem Umlauf des mit Förderplätzen ausgestatteten Umlaufförderers (2) in der Einlaufstation (5) nur jeder zweite Förderplatz (3) auf dem Umlaufförderer (2) besetzt und in der Auslaufstation (10) nur jeder zweite Förderplatz (3), gegenüber der Einlaufstation (5) um einen Förderplatz (3) versetzt, entleert wird.

3. Verfahren nach Anspruch 1 oder 2, **dadurch gekennzeichnet, dass** in der mehrfach durchlaufenen Strecke (16) zwischen der Einlaufstation (5) und der Auslaufstation (10) eine Behandlung des Gefäßes (4) erfolgt.

4. Verfahren nach Anspruch 3, **dadurch gekennzeichnet, dass** die Behandlung des gleichen Gefäßes (4) bei jedem Durchlauf der Mehrfachdurchlauf-Strecke (16) erfolgt.

5. Verfahren nach einem der Ansprüche 1 bis 4, **dadurch gekennzeichnet, dass** die mehrfach durchlaufene Strecke (16) kürzer ist als die halbe Umlaufstrecke des Umlaufförderers (2) und dass die Gefäße (4) nach dem Einlauf zunächst diese kürzere Strecke (16) durchlaufen.

6. Vorrichtung zum Handhaben von Gegenständen, wie Gefäße (4), insbesondere Flaschen, mit einem Förderplätze (3) aufweisenden Umlaufförderer (2), an dem eine Einlaufstation (5) und eine Auslaufstation (10) angeordnet ist, wobei die Strecke (16) in Förderrichtung (A) zwischen der Einlauf- und der Auslaufstation (5,10) als Mehrfachdurchlauf-Strecke (16) ausgebildet ist, **dadurch gekennzeichnet, dass** der Umlaufförderer (2) so ausgebildet ist, dass er die Gegenstände zunächst an der Auslaufstation vorbei wieder zur Einlaufstation fördert.

7. Vorrichtung nach Anspruch 6, **dadurch gekennzeichnet, dass** bei einem Umlauf des Umlaufförderers (2) durch die Einlaufstation (5) nur jeder zweite Förderplatz (3) des Umlaufförderers (2) beschickbar und durch die Auslaufstation (10) nur jeder zweite Förderplatz (3) des Umlaufförderers (16), um einen Förderplatz (3) gegenüber der Einlaufstation (5) versetzt, entleerbar ist.

8. Vorrichtung nach Anspruch 6 oder 7, **dadurch gekennzeichnet, dass** der Umlaufförderer (2) eine ungerade Anzahl Förderplätze (3) aufweist.

9. Vorrichtung nach einem der Ansprüche 6 bis 8, **dadurch gekennzeichnet, dass** die Mehrfachdurchlauf- Strecke (16) eine Länge aufweist, die weniger als der Hälfte der Anzahl der Förderplätze (3) des Umlaufförderers (2) entspricht.

10. Vorrichtung nach einem der Ansprüche 6 bis 9, **dadurch gekennzeichnet, dass** die Auslaufstation (10) in . Förderrichtung (A) hinter der Einlaufstation (5) und unmittelbar benachbart zur Einlaufstation (5) angeordnet ist.

11. Vorrichtung nach einem der Ansprüche 6 bis 10, **dadurch gekennzeichnet, dass** in der Mehrfachdurchlauf-Strecke (16) eine Behandlungseinrichtung (17) für die Gefäße (4) angeordnet ist.

12. Vorrichtung nach Anspruch 11, **dadurch gekennzeichnet, dass** die Behandlungseinrichtung (17) eine Prüfvorrichtung zum mehrmaligen, zeitlich beabstandeten Bestimmen von Parametern ist.

13. Vorrichtung nach einem der Ansprüche 6 bis 12, **dadurch gekennzeichnet, dass** die Einlaufstation (5) einen Einlaufstern (6) aufweist, dessen wirksame Förderplätze (8) den doppelten Teilungsabstand (b) der Förderplätze (3) des Umlaufförderers (2) aufweisen.

14. Vorrichtung nach einem der Ansprüche 6 bis 13, **dadurch gekennzeichnet, dass** die Einlaufstation (5) eine Einteileinrichtung (9) enthält, mit der die Gefäße (4) in einen dem doppelten Teilungsabstand (a) der Förderplätze (3) des Umlaufförderers (2) entsprechenden Teilungsabstand (b) bringbar sind.

15. Vorrichtung nach einem der Ansprüche 6 bis 14, **dadurch gekennzeichnet, dass** die Auslaufstation (10) einen Auslaufstern (12) aufweist, dessen wirksame Förderplätze (13) in einem Teilungsabstand (b) angeordnet sind, der den doppelten Teilungsabstand (a) der Förderplätze (3) des Umlaufförderers (2) entspricht.

16. Vorrichtung nach einem der Ansprüche 6 bis 15, **gekennzeichnet durch** einen von einer Einteilschnecke (9) beschickten Einlaufstern (6), ein Karussell (2) mit einer ungeraden Anzahl Förderplätze (3), einen Auslaufstern (12) und einer Prüfeinrichtung (17), wobei der Auslaufstern (12) in Förderrichtung (A) benachbart zum Einlaufstern (6) angeordnet ist, wobei zwischen dem Einlauf- und dem Auslaufstern (6, 12) eine Doppeldurchlauf- Strecke (16) gebildet ist, an der die Prüfeinrichtung (17) angeordnet ist, und wobei bei einem Umlauf des Karussells (2) **durch** den Einlaufstern (6) nur jeder zweite Förderplatz (3) des Karussells (2) beschickbar und **durch** den Auslaufstern (12) nur jeder zweite Förderplatz (3), gegenüber den Einlaufstern (6) um einen Förderplatz versetzt, entleerbar ist .

## Claims

1. Method of handling objects, such as containers (4), in particular bottles, in which the containers (4) are transferred at a feed station (5) to an endless conveyor (2), conveyed by the endless conveyor (2) first past a delivery station (10) and back past the feed station (5) to the delivery station (10) and removed from the endless conveyor (2) at the earliest when they reach the delivery station (10) for the second time, one section (16) being traversed several times in the conveying direction (A) between the feed station (5) and the delivery station (10).

2. Method according to claim 1, **characterised in that** the section (16) is traversed twice and that, upon each passage of the endless conveyor (2) provided with conveying stations, only every second conveying station (3) on the endless conveyor (2) is occupied in the feed station (5) and only every second conveying station (3), displaced by one conveying station (3) relative to the feed station (5), is emptied in the delivery station (10).

3. Method according to claim 1 or claim 2, **characterised in that** the container (4) is treated in the section (16) traversed several times between the feed station (5) and the delivery station (10).

4. Method according to claim 3, **characterised in that** the same container (4) is treated each time the multiple-passage section (16) is traversed.

5. Method according to one of claims 1 to 4, **characterised in that** the section (16) traversed several times is shorter than half the circular path of the endless conveyor (2) and that the containers (4) first traverse this shorter section (16) after the feed station.

6. Device for handling objects, such as containers (4), in particular bottles, comprising an endless conveyor (2) provided with conveying stations (3) and on which a feed station (5) and a delivery station (10) are arranged, the section (16) being designed as a multiple-passage section (16) in the conveying direction (A) between the feed and delivery stations (5, 10), **characterised in that** the endless conveyor (2) is designed in such a manner that it conveys the objects first past the delivery station back to the feed station.

7. Device according to claim 6, **characterised in that**, during one passage of the endless conveyor (2), only every second conveying station (3) of the endless conveyor (2) can be loaded by the feed station (5) and only every second conveying station (3) of the endless conveyor (2), displaced by one conveying station (3) relative to the feed station (5), can be emptied by the delivery station (10).

8. Device according to claim 6 or claim 7, **characterised in that** the endless conveyor (2) has an odd number of conveying stations (3).

9. Device according to one of claims 6 to 8, **characterised in that** the multiple-passage section (16) has a length corresponding to less than half the number of conveying stations (3) of the endless conveyor (2).

10. Device according to one of claims 6 to 9, **characterised in that** the delivery station (10) is arranged downstream of the feed station (5) and directly adjacent to the feed station (5) in the conveying direction (A).

11. Device according to one of claims 6 to 10, **characterised in that** a treatment device (17) for the containers (4) is arranged in the multiple-passage section (16).

12. Device according to claim 11, **characterised in that** the treatment device (17) is a test device for the repeated determination of parameters at intervals.

13. Device according to one of claims 6 to 12, **characterised in that** the feed station (5) has a feed star wheel (6), the active conveying stations (8) of which have twice the spacing (b) of the conveying stations (3) of the endless conveyor (2).

14. Device according to one of claims 6 to 13, **characterised in that** the feed station (5) contains a distributing device (9) by means of which the containers (4) can be brought to a spacing (b) corresponding to twice the spacing (a) of the conveying stations (3) of the endless conveyor (2).

15. Device according to one of claims 6 to 14, **characterised in that** the delivery station (10) has a delivery star wheel (12), the active conveying stations (13) of which are arranged at a spacing (b) corresponding to twice the spacing (a) of the conveying stations (3) of the endless conveyor (2).

16. Device according to one of claims 6 to 15, **characterised by** a feed star wheel (6) loaded by a distributing screw (9), a carousel (2) with an odd number of conveying stations (3), a delivery star wheel (12) and a test device (17), in which the delivery star wheel (12) is arranged adjacent to the feed star wheel (6) in the conveying direction (A), a double-passage section (16) on which the test device (17) is arranged is formed between the feed and delivery star wheels (6, 12) and, upon one passage of the carousel (2), only every second conveying station (3) of the carousel (2) can be loaded by the feed star wheel (6) and only every second conveying station (3), displaced by one conveying station relative to the feed star wheel (6), can be emptied by the delivery star wheel (12).

## Revendications

1. Procédé de manipulation d'objets tels que des récipients (4), notamment des bouteilles,
les récipients (4) étant transférés au niveau d'un poste d'entrée (5) à un convoyeur circulant (2) et du convoyeur circulant (2) tout d'abord dans un poste de sortie (10) puis en repassant par le poste d'entrée (5) vers le poste de sortie (10) et être évacués du convoyeur en circulation (2) au plus tôt lorsqu'ils arrivent pour la seconde fois dans le poste de sortie (10),
selon lequel, on fait parcourir plusieurs fois un trajet (16) dans le sens du transfert (A) entre le poste d'entrée (5) et le poste de sortie (10).

2. Procédé selon la revendication 1,
**caractérisé en ce qu'**
on parcourt deux fois le trajet (16), et
à chaque circulation du convoyeur de transfert (2) équipé d'emplacements de transfert, dans le poste d'entrée (5), on garnit seulement chaque second emplacement de transfert (3) du convoyeur de transfert (2) et, dans le poste de sortie (10), on guide seulement chaque second emplacement de transfert (3), de façon décalée d'un emplacement de transfert (3) par rapport au poste d'entrée (5).

3. Procédé selon la revendication 1 ou 2,
**caractérisé en ce qu'**
on traite le récipient (4) entre le poste d'entrée (5) et le poste de sortie (10) dans le chemin (16) parcouru plusieurs fois.

4. Procédé selon la revendication 3,
**caractérisé en ce qu'**
on traite le même récipient (4) à chaque passage du chemin à passages multiples (16).

5. Procédé selon l'une des revendications 1 à 4,
**caractérisé en ce qu'**
le trajet (16) parcouru plusieurs fois est plus court que le demi-trajet de circulation du convoyeur de circulation (2) et après l'entrée, les récipients (4) parcourent tout d'abord le trajet (16) le plus court.

6. Dispositif de manipulation d'objets tels que des récipients (4), notamment des bouteilles, comprenant un convoyeur de circulation (2) avec des emplacements de transfert (3), ce convoyeur passant dans un poste d'entrée (5) et un poste de sortie (10),
le trajet (16) entre le poste d'entrée et le poste de sortie (5, 10) dans le sens de transfert (A) étant un trajet de parcours multiples (16),
**caractérisé en ce que**
le convoyeur de circulation (2) transfère les objets tout d'abord dans le poste de sortie puis de nouveau vers le poste d'entrée.

7. Dispositif selon la revendication 6,
**caractérisé en ce que**
lors d'une circulation du convoyeur de circulation (2) à travers le poste d'entrée (5), on charge seulement chaque second emplacement de transfert (3) du convoyeur de transfert (2) et, à travers le poste de sortie (10), on évacue seulement chaque second emplacement de transfert (3) du convoyeur de circulation (16) pour un emplacement de transfert (3) décalé par rapport à celui (5) du poste d'entrée.

8. Dispositif selon les revendications 6 ou 7,
**caractérisé en ce que**
le convoyeur de circulation (2) a un nombre impair d'emplacements (3).

9. Dispositif selon l'une des revendications 6 à 8,
**caractérisé en ce que**
le trajet à parcours multiples (16) a une longueur inférieure à la moitié du nombre d'emplacements de transfert (3) du convoyeur de circulation (2).

10. Dispositif selon l'une des revendications 6 à 9,
**caractérisé en ce que**
le poste de sortie (10) est en aval du poste d'entrée (5) dans le sens de transfert (A) et directement au voisinage du poste d'entrée (5).

11. Dispositif selon l'une des revendications 6 à 10,
**caractérisé en ce que**
le trajet à parcours multiples (16) est équipé d'une installation de traitement (17) des récipients (4).

12. Dispositif selon la revendication 11,
**caractérisé en ce que**
l'installation de traitement (17) est un dispositif de contrôle pour déterminer le passage répété de paramètres donnés, définis dans le temps.

13. Dispositif selon l'une des revendications 6 à 12,
**caractérisé en ce que**
le poste d'entrée (5) comporte une étoile d'entrée (6) dont les emplacements de transfert (8), actifs, ont un pas double de celui (b) des emplacements de transfert (3) du convoyeur de circulation (2).

14. Dispositif selon l'une des revendications 6 à 13,
**caractérisé en ce que**
le poste d'entrée (5) comporte une installation de répartition (9) à l'aide de laquelle on répartit les récipients (4) suivant un pas (b) correspondant au double du pas (a) des emplacements de transfert (3) du convoyeur de circulation (2).

15. Dispositif selon l'une des revendications 6 à 14,
**caractérisé en ce que**
le poste de sortie (10) a une étoile de sortie (12) dont les emplacements de transfert actifs (13) sont à un pas (b) qui correspond au double du pas (a) des emplacements de transfert (3) du convoyeur de circulation (2).

16. Dispositif selon l'une des revendications 6 à 15,
**caractérisé par**
une étoile d'entrée (6) alimentée par une vis de répartition (9), un carrousel (2) avec un nombre impair d'emplacements de transfert (3), une étoile de sortie (12) et une installation de contrôle (17),
l'étoile de sortie (12) est au voisinage, dans la direction de transfert (A), de l'étoile d'entrée (6),
entre l'étoile d'entrée et l'étoile de sortie (6, 12) on a un trajet (16) à parcours double, avec l'installation de vérification (17) et en cas de rotation du carrousel (2), l'étoile d'entrée (6) n'alimente que chaque second emplacement de transfert du carrousel (2) et l'étoile de sortie (12) n'évacue que chaque second emplacement de transfert (3), lui-même décalé d'un emplacement de transfert par rapport à l'étoile d'entrée (6).
